# EUROPEAN PATENT SPECIFICATION

(11) **EP 2 341 011 B1**
(45) Date of publication and mention of the grant of the patent: **22.08.2012**
(21) Application number: 10197234.7
(22) Date of filing: 29.12.2010
(51) Int. Cl.: B65D 77/08, B65D 85/60, B65D 85/78, A23G 3/00, B65B 25/00

(54) **Package for at least one individual portion of a food composition**
Verpackung für zumindest eine individuelle Nahrungsmittelzusammensetzung
Emballage pour au moins une portion individuelle d'une composition alimentaire

(30) Priority: 29.12.2009 BE 200900816
(43) Date of publication of application: 06.07.2011
(73) Proprietor: Bauwens, Johan, 9521 Letterhouten (BE); Verschelden, Antoon, 9600 Ronse (BE)
(72) Inventor: Bauwens, Johan, 9521 Letterhouten (BE); Verschelden, Antoon, 9600 Ronse (BE)
(74) Representative: Duyver, Jurgen Martha Herman

(56) References cited:
- EP-A1- 1 810 576
- FR-A1- 2 614 008
- GB-A- 2 302 529

## Description

The present invention relates to a package for at least one individual potion of a food composition according to the preamble of the first claim, and to a method of forming an individual portion of a food composition within such a package according to the preamble of claim 15.

Food products which consist of one or more layers of a mass which is initially viscous but solidifies or stiffens in the course of time, such as bavarois, mousse, terrines, creams, ice cream and other such products, are characterised in that they are often highly sensitive. These products have a texture which is frequently very light and airy, and they often contain gelatine, which gives the end product a weak, fragile structure which can be damaged by lightly touching it. It is therefore difficult for the hotel, restaurant and catering sector to purchase such products in large quantities, then distribute them in smaller individually servable portions. These smaller portions will not generally be uniform in terms of shape and quantity, and their distribution into consumable portions is often detrimental to the structure of the food product, as a consequence of which no satisfactory result will be obtained in terms of presentation and the aesthetic aspect of the food product.

For this reason such food products are often supplied by the producer himself, individually and ready for sale or distribution, which means that the end user only has to remove the individual portions from the packaging, whereupon it can be immediately served up. Very often these types of food products are packed individually in an upright foil wrapping. The individual portions packed in foil can then be contained in a larger packaging material.

EP1810576A1 , which accords with the preamble of claim 1, describes a package for a food product of the type which comprises individually packed tubular portions of a food composition, as well as a method and device for producing such a food product. The food product described in EP1810576A1 comprises a shell with a multiplicity of protrusions, each of which have a vertical peripheral wall and a bottom, intended for carrying and receiving the individual portions. Each individual portion is wrapped in a sheet of a protective peripheral foil. The sheet is shaped by machining to form a tube in such a manner that two vertical lateral edges of the sheet overlap, thereby determining a closed volume of the inner side of the tubular wrapping. At the point where they overlap, the two vertical sides are attached to each other by one or two weld points. On the vertical side which is located on the outside of the wrapping, the foil is able to pass through a short distance in the centre to form a flap which facilitates the opening of the foil.

Once the foil has been welded to a wrapping for an individual portion, a multiplicity of wrappings is placed by machine in the protrusions of the shell, whereupon they are filled with a layered freely selected food composition. The welded foil wrapping therefore acts as a template for the food composition when producing the food product. The food composition, which is still in a condition of low fluidity at the beginning of the production process, can be inserted in the wrapping by means of a mechanical spraying mechanism, for example. In a similar manner different horizontal layers can be inserted in the wrapping formed by foil, layer upon layer, whereupon they are able to solidify or stiffen in the wrapping.

The packaging material described in EP1810576A1 suffers from the disadvantage that bavarois-type food compositions can be quickly damaged when the wrapping is removed, particularly when the welded seam is opened by the user. Since the weld points ensure that the foil wrapping cannot unroll during the production, they are necessarily in the food product of EP180576A1. The weld points, which are intrinsically difficult to break and therefore already considerably reduce user comfort, suffer from the major disadvantage that in the case of food compositions with a brittle or weak texture, such as a bavarois or a mousse, the action of opening the welded seam is often sufficient to damage the structure of the product. Since the foil wrapping functions poorly, both during the production process and afterwards, the foil should be manufactured from a sufficiently strong material to minimise damage to the food product. However, the disadvantage of using such a material is that the risk of damage to the food product when the seam is opened by the user is increased still further. Moreover, the risk of damage to the food product remains, particularly during transport of the food product to the consumer. To reduce this risk the food product manufactured will, in most cases, have to be packed in an additional rigid packaging before making it fully airtight. This involves additional costs and production steps, which is not desirable.

There is consequently a demand for a package for a food product of the type which contains individually packed tubular portions of a food composition which run a reduced risk of damage to the individual portions when removed from the package. Furthermore, there is a demand for an alternative method for manufacturing such a food product with a reduced risk of damage to the individual portions both during and after the production process.

It is therefore a first object of the present invention to provide a package for a food product of the type which contains at least one individual portion of a food composition, wherein the individual portions of the food composition run a lower risk of damage when removed from the package, e.g. for consumption.

It is a second object of the invention to provide a method of forming at least one individual portion of a food composition within a package with a reduced risk of damage to the food product during the production process and afterwards..

The first object is achieved with a packagewhich has the technical features of the characterising part of the first claim.

To this end the package of this invention is characterised in that it comprises a second shell, separate from the first shell, which is positioned in such a manner relative to the first shell that the axial direction of the tubular foil extends between the first shell and an opening in the second shell which enables the tubular foil to be filled with the food composition and the second shell interacts with the first shell and the foil so that the foil folded into a tubular shape is clamped between the first and second shells in order to preserve the tubular shape.

In the package of this invention both shells interact in such a manner that the foil is clamped so that the tubular shape of the foil is retained, particularly before and during the filling of the tubular foil with the food composition. The advantage of such a package is that the individual portions are surrounded by an enveloping foil where it is not necessary to weld the vertical edges of the foil together to guarantee dimensional stability of the foil. Due to the absence of a joint, the risk of damage to the individual portions will therefore be minimal when removing the foil, e.g. for consumption. The absence of weld points along the vertical edges of the foil provides the additional advantage that a machining step, which also involves a risk of damage, is less necessary during production. Furthermore, the tubular foil can be filled in the package itself because a food composition can be inserted through the same opening in the tubular foil.

In this case the foil which retains its shape because of the two interacting shells acts as a template for a food composition with low fluidity inserted through the opening of the second shell. If layered, this food composition can be built up in this manner layer on layer. Afterwards the food composition can stiffen or solidify in the packaging material..

Due to the presence of both the first shell, the second shell and the foil, the individual portions of the food composition are better protected and they are less likely to be damaged, even during storage or purchase. Moreover, the use of the first and second shells gives rise to stackable food products.

In the package of this invention the first and second shells perform both the function of template during production and the function of packaging for the end product. This has the advantage that no reusable templates need be used, as a result of which the food products would have to be removed simultaneously in the production of a new load, with the associated risk of damage. Furthermore, the production process for such a food product can be fully automated without reusable templates and without the requirement of human intervention. In view of the strict regulations relating to hygiene in the food sector, and in view of the requirements which are imposed on personnel who come into contact with the food, this is a substantial advantage. The package can be manufactured from plastic or another type of synthetic material which therefore also acts as a disposable template.

The foil can be made beforehand into a tubular shape by machine, whereupon the tubular foil can be fed through the opening in the second shell into the packaging material. When the tubular foil is released, both shells will take over the supporting function on the foil and will maintain the tubular shape of the foil without additional means of adhesion having to be fitted.

In a preferred embodiment the tubular foil can be at least partially clamped in at least one protrusion which is located in at least one of the shells, where the protrusion comprises a vertical peripheral wall which at least partially encloses the foil folded into a tubular shape, and where the protrusion is also provided with one proximally located side relative to the other shell and one distally located side relative to the other shell, the proximally located side being open.

Such a protrusion has the advantage that it encloses the entire peripheral wall, thus ensuring that it is supported better during the production, and that the food composition inserted in the foil will in this manner also be better protected. Consequently this food composition runs a reduced risk of damage, even during storage or sale. The protrusions may also be present in both shells, where a foil is supported by both a protrusion in the first shell and by a protrusion in the second shell.

The at least one protrusion preferably extends in a direction facing away from the packaging material.

Such a structure of the protrusions on the shells provides the advantage that the two main planes of the first and second shells will lie close to each other at all times. Due to the adjacent position of the two shells, it will be possible to fasten them together easily, for example. Moreover, such shells are very easy to produce.

In a preferred embodiment of the invention the protrusion is present in the second shell and the opening is provided in the distally located side of the protrusion.

The foil in such an embodiment can be inserted directly into both shells of the packaging material through the opening, where it is supported by the first shell and will be supported immediately after release by the protrusion in the second shell. The food composition can then also be inserted in the foil shaped into a tube through the opening.

If the foil formed into a tube is supported for the most part by the protrusion in the second shell, a high proportion of this support is lost when the second shell is removed for consumption. However, this has little influence on the structure of the individual portions of the food composition, since they are already solidified or stiffened. The foil will also retain its tubular structure it they will adhere to the solidified food composition. However, the absence of the support provides the further advantage that the individual portions will be detachably placed on the first shell, and can therefore be easily removed from the shell, as a result of which the risk of damage to the individual portions is negligible.

In a preferred embodiment, the vertical peripheral wall of the protrusion in the second shell preferably has a distal peripheral wall, where an inner edge directed towards the volume enclosed by the protrusion extends along at least part of the distal peripheral wall, which restricts the opening.

Such an inner edge reduces the risk that the foil may leave the package via the opening in the protrusion in the second shell, both during and after the production process. Because the first and second shell are normally produced from light materials, there is a risk that when both shells are conveyed on the conveyor belt, the foil not yet filled is moved by the impacts from the protrusion. Even after the production process there is a risk that the foil will move out of the uppermost shell, e.g. if the food product filled food product tilts over during any further packing or during transport. The provision of an inner edge which extends in the direction of the volume enclosed by the protrusion reduces this risk

The distally located side of the protrusion in the first shell is closed.

As a result of this the hygiene of the package increases because the distally located side of protrusions in the first shell generally supports the foil and the food composition as a bottom.

A protrusion preferably has a conical shape, the surface area of the distally located side being smaller than the surface area of the proximally located side.

Such a conical shape in a protrusion in the second shell has the advantage that the second shell of the packaging material for the food product is more easily removable because friction is produced at the time of removal of the second shell. Furthermore, the conical shape reduces the risk that the foil may be removed from the protrusion n the uppermost shell both during and after the production process. Furthermore, a shell in which the at least one protrusion has such a conical shape can be produced relatively cheaply because a flat surface can be pushed or blown into this shape under heating, which is generally cheaper than injection moulding

If protrusions in the first shell also have such a conical shape, this provides the advantage that the individual portions of the food composition can be removed more easily from the first shell for consumption because the friction is reduced when the individual portions are removed from the lower shell. Moreover, the first shell can be produced more cheaply.

The first shell is preferably connected detachably to the second shell.

In this manner the second shell can easily be removed if access to the individual portions is required.

Both shells of the packaging material are preferably provided with interacting positioning means in order to determine the detachable position of the first shell relative to the second shell.

These interacting positioning means guarantee correct, stable positioning of the second shell on the first shell.

The protrusion preferably has a vertical peripheral wall and there is an open space between the foil and vertical peripheral wall.

The at least one protrusion in the shells will normally exert the primary supporting action on the foil formed into a tube. The presence of a small open space between the foil and the vertical peripheral wall of the protrusion facilitates the removal of the individual portions with minimal risk of damage.

The proximal and distal side of the protrusion are preferably circular.

Such a structure of the protrusion is perfect for supporting a cylindrical individual portion of the food composition with a round upper and lower side. This is generally one of the most common forms of bavarois-type food products.

The foil is preferably rectangular in shape.

Such a foil is perfect for wrapping a cylindrical individual portion of the food composition.

The foil is preferably made from a transparent material.

The advantage of a transparent material is that the food composition is clearly visible. If a plurality of different layers of the food composition is applied, an aesthetic effect can also be created.

The individual portion preferably has an upper side, a cover being provided on the upper side of the individual portion.

Such a cover protects the food composition from contact with dirt and impurities in the food product deriving from above.

A cover is preferably provided on the second shell.

With such a cover it is possible to protect all individual portions without requiring separate covers for each individual portions.

The foil preferably forms not only the two shells but also a separate part of the packaging material.

This provides the advantage that the individual portions contained in the foil can easily be removed from the two shells of the packaging material.

The second object of the invention is achieved by a method of forming at least one individual portion of a food composition within a package according to the present invention which has the technical features of the characterising part of claim 15.

To this end the method is characterised in that it comprises the following steps:
(a) the pre-forming of the foil into a tubular shape so that the vertical edges overlap at least partially in the peripheral direction.
(b) the application of the foil shaped into a tube between the first and second shell
(c) the filling of the closed tubular foil with the food composition through the opening in the second shell.

The bottom and top shells are preferably positioned on each other by means of the detachably connectable interacting positioning means, whereupon the foil is preferably machined into a tubular shape. The foil shaped into a tube is then inserted into the protrusion through the opening in the second shell for forming a closed foil volume, and in a final step this closed foil volume is filled with the food composition.

However, it is also possible for the foil shaped to form a tube to be first placed in a protrusion in the first shell, whereupon the second shell is positioned on the first shell in such a manner that the protrusion in the second shell slides over the foil shaped into a tube. In this case the opening is only used to insert the food composition and not the foil itself.

The application of the foil in the protrusion for filing the foil reduces the risk of damage to the food product both during and after the food product production process.

The filling of the closed foil volume may comprise one or more steps, where a first food composition is applied in a first step and a second food composition is applied in a subsequent step for forming a layered portion.

After the closed foil volume has been filled, the food product can optionally be packed air-tight by means of an additional foil in order to prolong the shelf life of the end product.
Figure 1 shows a perspective view of a first preferred embodiment of the package of this invention.
Figure 2 shows a perspective view of the second shell of a first preferred embodiment of the package.
Figure 3 shows a cross-section of the second shell of a first preferred embodiment of the package.
Figure 4 shows an elevation of the second shell of a first preferred embodiment of the package in which the position of the cross-section shown in Figure 3 is indicated.
Figure 5 shows a perspective view of the first shell of a first preferred embodiment of the package.
Figure 6 shows a cross-section of the first shell of a first preferred embodiment of the package material.
Figure 7 shows an elevation of the first shell of a first preferred embodiment of the package in which the position of the cross-section shown in Figure 6 is indicated.
Figure 8 shows a side view of a first preferred embodiment of the package.
Figure 9 shows a diagrammatic representation of a side view of a first preferred embodiment of the package in which the position of the foil is indicated by dotted lines.
Figure 10 shows a diagrammatic representation of a side view of a first preferred embodiment of the package material in which the position of the foil is represented by dotted lines together with the food composition which is surrounded by the foil.
Figure 11 shows an elevation of the second shell of a second preferred embodiment of the package.
Figure 12 shows a cross-section of the first shell of a second preferred embodiment of the package.
Figure 13 shows a cross-section of a first and the second shell of a second preferred embodiment of the package.
Figure 14 shows a cross-section of the first and the second shell of a second preferred embodiment of the package in which the foil is represented.
Figure 15 shows a cross-section of the first and the second shell of a second preferred embodiment of the package

in which the foil is represented together with the food composition which is surrounded by the foil.

### Description of figures

1. First shell
2. Interacting positioning means in the first shell
3. Foil
4. Food composition
5. Protrusion in the first shell
6. Distal side of the protrusion in the first shell
7. Proximal side of the protrusion in the first shell
8. Peripheral wall of the protrusion in the first shell
9. Inner side peripheral wall of the protrusion in the first shell
10. Second shell
11. Package
12. Interacting positioning means in the second shell
13. Distal peripheral edge of the protrusion in the second shell
14. Inner edge of the distal peripheral edge of the protrusion in the second shell
15. Protrusion in the second shell
16. Distal side of the protrusion in the second shell
17. Proximal side of the protrusion in the second shell
18. Peripheral wall of the protrusion in the second shell
19. Inner edge of the peripheral edge of the protrusion in the second shell
20. Opening
21. Upper edge of foil

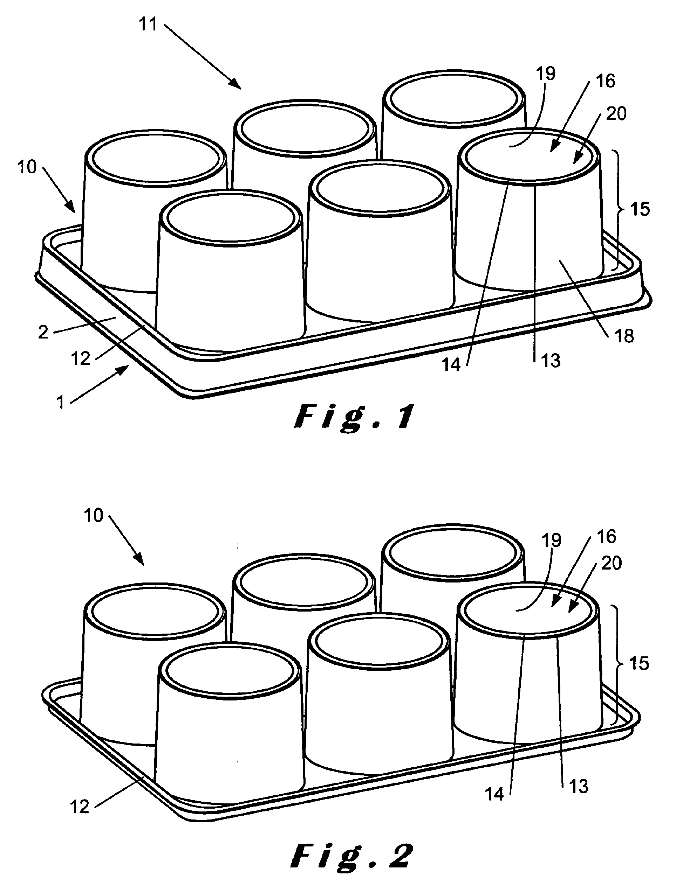

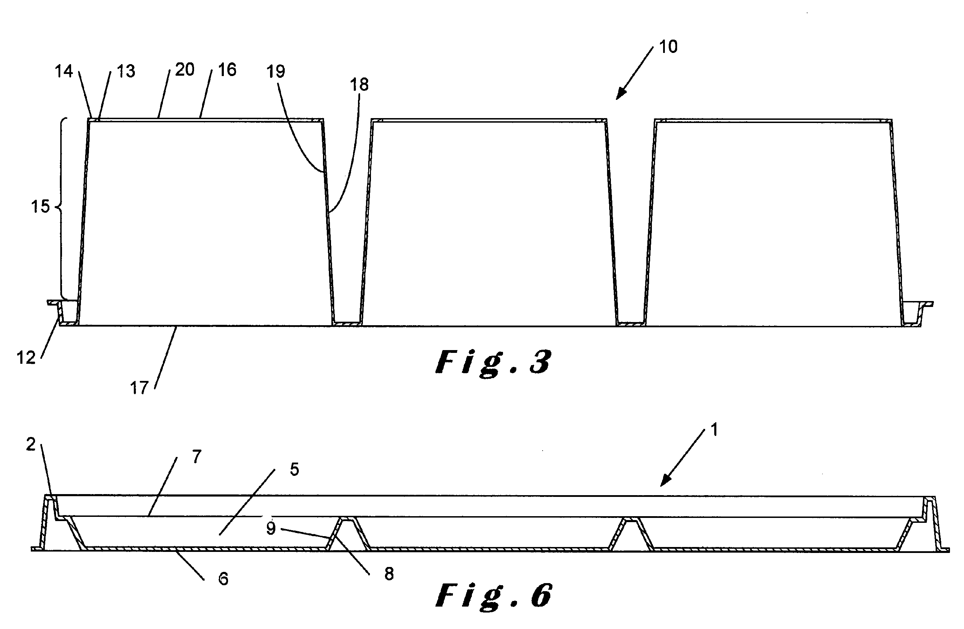

A first preferred embodiment of package 11 according to this invention, which is shown in Figures 1-10, comprises a first shell 1 and a second shell 10, which is placed on the top of first shell 1. Second shell 10 is positioned detachably on first shell 1. To this end second shell 10 and first shell 1 are provided with interacting positioning means 2, 12.

In second shell 10 (see Figures 1,2,3,4) a multiplicity of protrusions 15 can be provided. Each protrusion 15 contains a vertical peripheral wall 18 provided with an inner side 19 and an outer side. Each protrusion also contains a distal 16 and a proximal 17 side relative to the first shell 1. Both the proximal 17 and distal side 16 of a protrusion 15 in second shell 10 are at least partially open. Proximal side 17 is preferably fully open and in distal side 16 an opening 20 is provided which enables a foil 3 to be inserted into packaging material 11, then, via the same opening 20, enables foil 3 to be filled with food composition 4. The vertical peripheral wall 18 of a protrusion 15 in second shell 10 is also preferably provided with a distal peripheral edge 13. An inner edge 14, directed towards the volume enclosed by protrusion 15, can extend along at least part of distal peripheral edge 13, as shown in Figure 1 by way of example. The number of protrusions 15 present in second shell 10 is not critical to this invention and may be selected by the person skilled in the art taking account of the intended end product.

First shell 1 (see figures 1,5,6,7) may be essentially a flat plate. However, a multiplicity of protrusions 5 may also preferably be provided in first shell 1. Each protrusion 5 in first shell 1 also comprises a distal 6 and a proximal side 7 relative to second shell 10, wherein proximal side 7 is at least partially open and wherein distal side 6 is closed and acts as a bottom. Furthermore, a protrusion 5 in first shell 1 also comprises a vertical peripheral wall 8, with an inner side 9 directed toward food composition 4 and an outer side. The number of protrusions 5 present in first shell 1 is not critical to this invention and may be selected by the person skilled in the art, taking into account the intended end. The protrusions which preferably lie in the first shell and those in the second shell lie opposite each other.

An individual portion of a food composition 4 is packed in a foil 3. This foil 3 is formed into a tubular shape and is inserted into the two shells 1,10 of the packaging material. Both shells 1,10 will interact in order to clamp foil 3 so that it retains its tubular shape without additional means of adhesion being required. This is achieved essentially by supporting film 3 by means of one or a plurality of protrusions 5, 15. In this embodiment the support is provided mainly by protrusions 15 in second shell 10. Foil 3, in a tubular shape, comprises a vertical peripheral wall, an upper edge 21 and a lower edge.

An individual portion of food component 4 in foil 3 may rest with its lower side on first shell 1, for example. If there are protrusions 5 in first shell 1, the individual portion may rest on its distal side 6. An individual portion of food component 4 may optionally comprise an additional self-loosening bottom layer on which rests the individual portion. The self-loosening bottom layer comprises an upper side and a lower side.

By "self-loosening" is meant that the bottom layer does not continue adhering to first shell 1. The self-loosening bottom layer can be manufactured from any material considered suitable by the person skilled in the art and may, for example, be formed by a biscuit or small carton attached to distal side 6 of a protrusion 5 in first shell 1. The use of a biscuit or small carton, or generally of a self-loosening bottom layer, has the advantage that the risk that the sometimes sticky food composition 4 remains adhered to distal side 6 of protrusion 5 in first shell 1 when the individual portions are removed from packaging material 11.

The self-loosening bottom layer may be attached during the production process of the food product contained in packaging material 11 according to the invention, before or after foil 3 is applied in protrusion 15 of second shell 10.

The lower edge of foil 3 preferably extends at least as far as the upper side of the self-loosening bottom layer so that the tubular portions of food composition 4 are fully enclosed along their periphery by foil 3 and the risk of damage is reduced. The lower edge of foil 3 may in this case extend to the lower or upper side of the self-loosening bottom layer of the food product. The choice depends, among other things, on the type of material used for the bottom layer and/or on the size of the tubular portion. In the case of a hard and/or inedible self-loosening bottom layer and/or in the case of relatively small tubular portions a foil 3, for example, extending as far as the upper side of the self-loosening bottom layer, will frequently be opted for.

Second shell 10 and first shell 1 comprise interacting positioning means 2, 12, which together ensure correct, stable positioning of second shell 10 on first shell 1. Positioning means 2, 12 are preferably chosen so that they ensure a detachable connection of second shell 10 and first shell 1. The nature and shape of the detachably connectable positioning means 2, 12 are not essential to this invention, and each connecting means 2, 12 considered suitable by the person skilled in the art may be selected. In the preferred embodiment represented in Figures 1-7, connecting means 2, 12, assume the form of projecting edges 12 in second shell 10 and complementary slots 2 in the first shell 1 which can receive the edges 12 of second shell 10. These complementary edges 12 and slots 2 prevent second shell 10 from being displaced relatively to first shell 1 in the horizontal direction.

As already mentioned above, second shell 10 comprises a multiplicity of protrusions 15 which extend in a direction away from first shell 1. Each protrusion 15 is provided with an at least partially open distal side 16 because opening 20 is located in distal side 16. This provides the possibility of placing a foil 3 in protrusion 15 in second shell 10 through opening 20 in the distal side 16, and to apply food composition 4 in the production of the food product contained in package 1. Furthermore, each protrusion 15 also has an at least partially open proximal side 17. This enables foil 3 to be inserted through opening 20 directly into protrusions 5 of first shell 1. After foil 3 has been formed into a tubular shape and has been inserted into both shells 1, 10 of package 11, inner side 9 of peripheral wall 8 of protrusion 15 acts as a support for foil 3, which encloses the individual portions.

Protrusions 15 in second shell 10 are preferably designed so that they have a conical shape, distal side 16 of protrusion 15 having a surface area that is smaller than a surface of proximal side 17. Such a conical shape has the advantage, among other things, that second shell 10 of package 11 is more easily removable because friction during the removal of second shell 10 is reduced. In the preferred embodiment which is represented in Figures 1-10, both distal side 16 and proximal side 17 of protrusions 15 are circular in shape, both circles being located concentrically to each other. However, the invention is in no way limited to this. The shape of both distal 16 and proximal side 17 may be freely selected. Proximal 17 and distal side 16 may also assume a different shape. The shape of proximal 17 and distal side 16 finally selected may influence the shape of the individual portions of food composition 4. Thus a certain aesthetic effect can be created by selecting a certain shape of protrusions 15 of second shell 10, whether or not combined with a certain shape of protrusions 5 in first shell 1 or a certain shape of foil 3.

Vertical peripheral wall 18 of protrusion 15 in second shell 10 is represented in Figures 1-10 as a flat wall, but is not limited to this. However, the wall may be folded or notched, taking account of the shape of distal 16 and proximal side 17 of protrusion 15 in second shell 10, or may contain perforations at certain points, if this is desirable, or may assume any other shape which is known to the person skilled in the art.

Inner side 19 of this peripheral wall 18 provides support for foil 3, as mentioned earlier. In a preferred embodiment a layer may be applied on inner side 19 of peripheral wall 18, which makes difficult adhesion of foil 3 and food composition 4 to inner side 19 of peripheral wall 18.

Uppermost peripheral edge 13 of protrusion 15 in second shell 10 preferably comprises an inner edge 14 which extends towards the volume enclosed by protrusion 15 and restricts opening 30. If there are to be processing steps in the production or handling of packaging material 11, in which both shells 1, 10 of packaging material 11 containing foil 3 are kept in a reverse position, such an edge 14 provides the advantage that foil 3 cannot fall out of packaging material 11. Such an edge 14 may be permanently present in protrusion 15, or may be fitted here in a detachable manner. The latter provides the advantage that inner edge 14 can be removed when foil 3 is fitted and foil 3 cannot prevent its insertion.

Since protrusions 15 in second shell 10 have an opening 20 in distal side 16 it may be desirable to protect distal side 16 against contact with dirt and impurities which may enter the food product from above. To this end packaging material 11 of this invention may be equipped with a cover. This cover may assume the form of a large cover which is placed on the complete packaging material 11, and a plurality of small covers may also be selected which are placed on a protrusion 15 of second shell 10 or on the individual portions themselves. If one of the latter two covers is selected, the cover is preferably chosen so that it has the same shape as distal side 16 of a protrusion 15 in second shell 10 and an individual portion of food composition 14 respectively. Another possibility is that food composition 4 first stiffens in the individual portions, whereupon the entire second shell 10 is removed and replaced by a new second shell whose distal side 16 of protrusions 15 is closed. The new second shell has no openings 20 but is also fully identical to the original second shell 10. This new second shell therefore acts as a cover and protects the individual portions of food composition 4

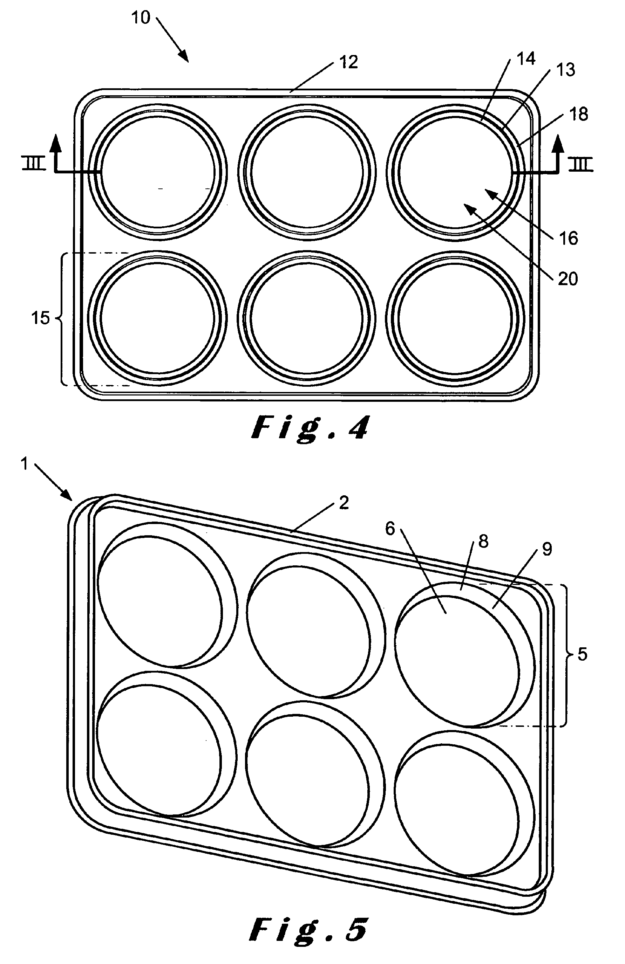

Furthermore, first shell 1 of packaging material 11 preferably comprises a multiplicity of protrusions 5, as shown in Figures 5, 6 and 7 for carrying the individual portions. Protrusions 5 have an open proximal side 7 relative to the second shell, a closed distal side 6 which acts as a bottom, and a vertical peripheral wall 8. Moreover, protrusions 5 are characterised in that a projection of proximal side 7 of a protrusion 15 of second shell 10 overlaps at least partially on first shell 1 with a corresponding protrusion 5 in first shell 1. A preferred embodiment of this invention is shown in Figures 1-10, where both proximal 7 and distal side 6 of protrusion 5 in first shell 1 are circular and extend concentrically relative to each other and concentrically relative to proximal 7 and distal side 6 of a corresponding protrusion 15 of second shell 10. Such an embodiment of the invention is ideal for producing individual portions which are cylindrical in shape. However, the invention is in no way limited to this embodiment. Just as distal 16 and proximal side 17 of protrusions 15 of second shell 10, proximal 7 and distal side 6 of protrusions 5 of first shell 1 may be freely selected. Therefore a triangle, square, hexagon or octagon or star shape, or any other shape known to the person skilled in the art, can be chosen and the shapes of distal 6 and proximal sides 7 differ. Proximal 7 and distal side 6 may not lie concentrically relative to each other or relative to distal 16 and proximal side 17 of protrusions 15 of second shell 10 either. If an individual portion is to be created, for example, which is positioned at a slightly inclined angle, it is even better for these sides not to be placed concentrically to each other.

The most important function of distal side 6 of protrusion 5 in first shell 1 is to carry the individual portions of food composition 4. Distal side 6 is preferably flat, but it may also assume other shapes. Distal side 6, which acts as a bottom, may serve as a support for food composition 4, but may also serve as a support for a self-loosening bottom layer which supports food composition 4.

Both shells 1, 10 may be produced from any material which is considered suitable by the person skilled in the art. Examples of materials which can be used are cardboard, plastic and metal. Both shells 1, 10 may possibly be produced from a different material. First shell 1 may, for example, be produced from a more expensive metal than second shell 10, and decorative elements may be applied to it. Thus second shell 10 may be removed for consumption and the individual portions may be presented in first shell 1.

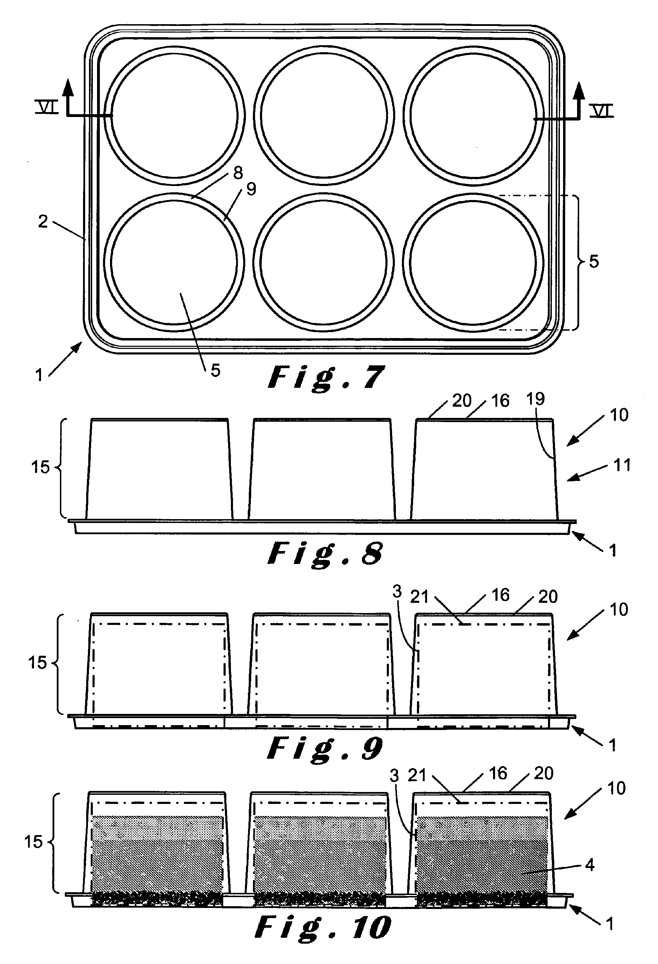

The individual portions of food composition 4 are wrapped in a foil 3 which is shaped into a tube (see Figures 9, 10). Foil 3 is preferably rectangular in shape. Such a rectangular shape may be formed into a tube in such a manner that the two shortest parallel sides overlap, the two longest parallel sides forming two closed circles. These two circles therefore define a lower and an upper side with a lower and upper edge 21 of tubular foil 3, which in this case is cylindrical in shape. If folds are made in foil 3 which are parallel with the three shortest sides of the rectangle, tubular foils 3 can be formed, the upper and lower side of which do not consist of a circle but of a triangle, square, pentagon, hexagon or octagon, or any other sort of polygon, for example. An aesthetic effect can thereby be achieved. If foils 3 of a different shape are selected, where the sides consist of sloping lines, for example, the individual portions may assume different shapes, such as a conical structure or any other desirable shape. Foil 3 can be inserted into the two shells 1,10 through opening 20 in distal side 16 of protrusion 15 in second shell 10, after both shells 1,10 have been positioned on each other. However, it is also possible for foil 3 to be first placed in a protrusion 5 in first shell 1, whereupon second shell 10 is positioned on first shell 1 in such a manner that protrusion 15 in second shell 10 slides over foil 3 formed into a tube. In this case opening 20 is only used to insert food composition 4 and not foil 3 itself. The shape of protrusions 5,15 in first shell 1 and second shell 10 is preferably also chosen so that they closely correspond to the shape of foil 3. The best support for foil 3, and hence also food composition 4, are therefore achieved. However, this is not an absolute condition. On the contrary, it is even advantageous in some cases for the shape of foil 3 and the shapes of protrusions 5,15 to differ. The required support can in this case still be provided, although not over the entire peripheral wall of foil 3, but the friction generated by the removal of shells 1, 10 will be then be considerably reduced.

Foil 3 is preferably produced from a transparent material. A transparent material has the advantage that food composition 4 is highly visible. If a plurality of different layers of a food composition is applied, an aesthetic effect can also be achieved. The material from which foil 3 is produced is preferably plastic or any other material that has similar properties. Foil 3 may also be non-transparent. In this case a plurality of materials may be considered for producing foil 3. For example, different sorts of plastic which are not transparent may be used. Cardboard, paper, plasticised cardboard or paper, or any other material known to the person skilled in the art may also be considered. The colour of foil 3 may be selected at random by the person skilled in the art. A colour is preferably chosen so that an aesthetic effect is created in combination with the colour and structure of food composition 4 wrapped in foil 3. Certain drawings, figures, logos or pieces of text may also be applied to foil 3. Foil 3 may have a flat structure, but the structure may be notched or undulating, it may contain a relief print, or it may assume any other structure known to the person skilled in the art.

Food composition 4 which is wrapped in foil 3 is preferably a low fluidity food composition 4 which stiffens in the packaging material (see Figure 10). The bavarois, mousses and terrines belong to this category. These types of food compositions 4 may be inserted directly in foils 3 through an opening in distal side 16 of protrusions 15 of second shell 10. This is preferably achieved by means of spraying or pouring, but any other technique known to the person skilled in the art may also be considered. Food composition 4 may also have a powdery or granular structure. In this case it can be spread into foil 3 through opening 20. When food composition 4 is poured, sprayed or spread, foil 3 acts as a template in the production process. As indicated above, a biscuit may be used as a bottom to avoid the risk that food composition 4 may stick to distal side 6 of protrusions 5 in first shell 1. This biscuit may be inserted in protrusions 5 of first shell 1 through opening 20 of protrusions 15 in second shell 10. This may take place before or after foil 3 is inserted in packaging material 11. If this takes place before, foil 3 will rest on the biscuit. If this takes place afterwards, the biscuit, just as the food composition, will be wrapped in foil 3. If the individual portions consist of a plurality of food compositions 4, food composition 4 is preferably applied in a plurality of horizontal layers. An aesthetic effect is created in this manner. Such a structure can be achieved by applying the different layers from bottom to top layer on layer through opening 20 in protrusion 15 of second shell 10. Food composition 4 may be applied as far as upper edge 21 of foil 3, but is preferably not filled right to the top, in order to avoid overflowing of food composition 4. Food composition 4 may possibly project above upper edge 21 of foil 3 if, for example, there is still cream, a piece of chocolate or a dressing present above layered food composition 3.

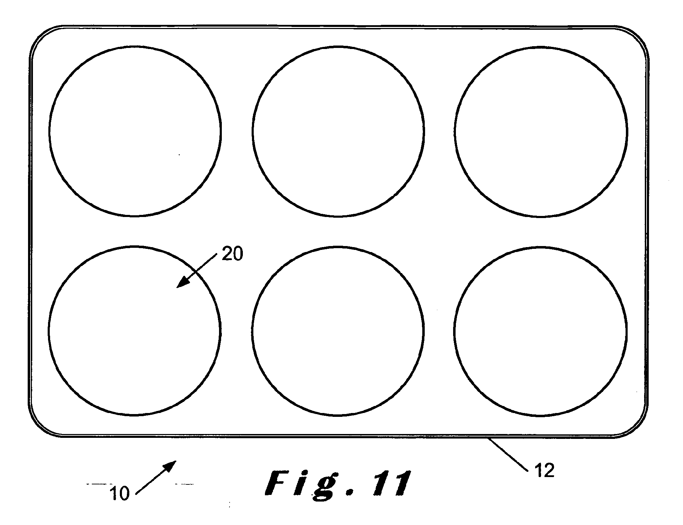

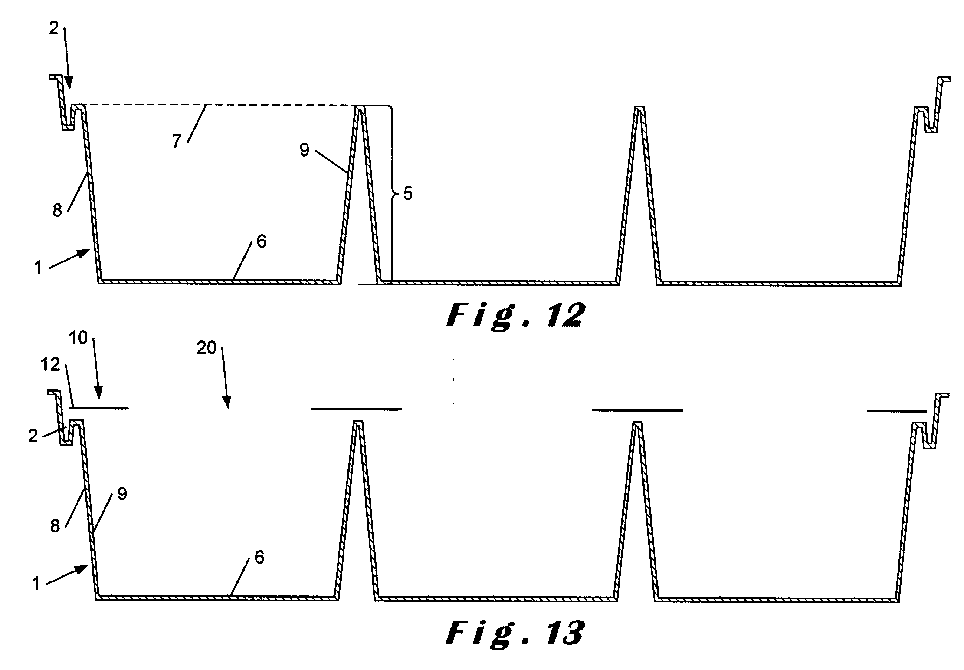

A second embodiment of packaging material 11 according to the present invention is shown in Figures 11-15 and also comprises a first 1 and a second shell 10, where second shell 10 is positioned on first shell 1 but differs from the first embodiment in that there are no protrusions present in second shell 10. Only first shell 1, which carries the individual portions of food composition 4, is provided with protrusions 5. This packaging material 11 is also designed to carry tubular individual portions of a bavarois-type food composition 4 contained in a foil 3. Furthermore, this embodiment is therefore almost identical to the first embodiment.

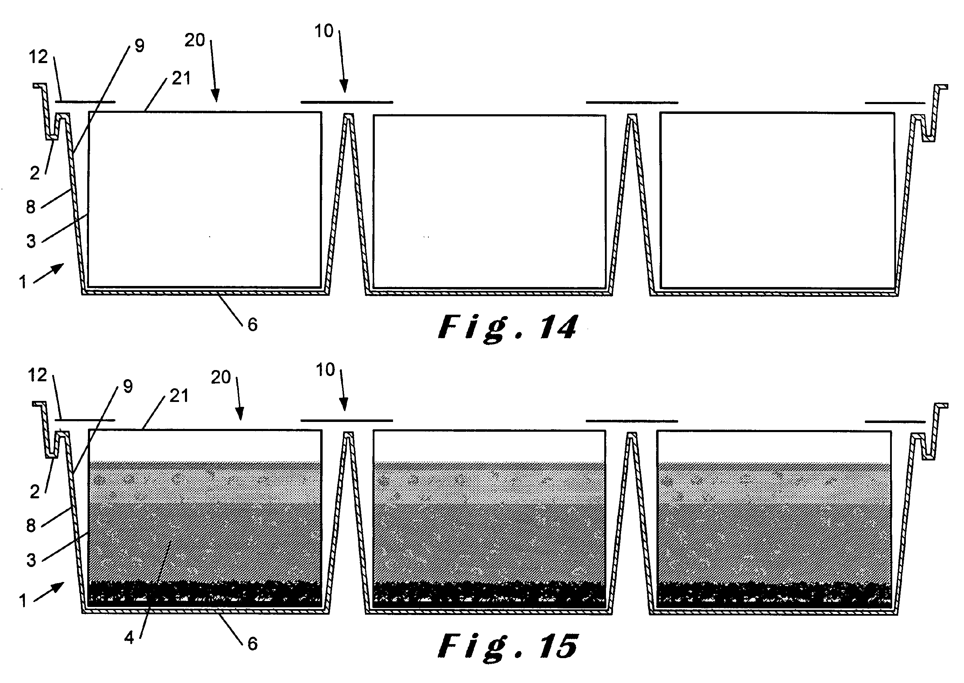

Both shells 1, 10 comprise interacting positioning means 2,12. The second shell 10 comprises, in addition to interacting positioning means 12, one or more openings 20 for inserting foil 3 and/or food composition 4. In this embodiment, however, openings 20 are not located in distal sides of protrusions, since they are not present, but in a main plane of second shell 10, which will generally be flat, but is by no means limited to this. A diameter of opening 20 is preferably essentially equal to the diameter of foil 3 formed into a tubular shape. This preferred embodiment is shown in Figures 14 and 15. In such an embodiment the upper edge of foil 21 projects slightly above the surface of second shell 10, and foil 3 will be supported at the top by an edge of opening 20. An embodiment may possibly also be chosen where the diameter of opening 20 is smaller than a diameter of the upper face of foil 3 formed into a tubular shape. This provides the advantage that upper edge 21 of tubular foil 3 will be retained by the principal surface of second shell 10, without preventing a food composition 4 from being inserted into package11 through opening 20 in second shell 10.

First shell 1 comprises one or more protrusions 5 having a distal 6 and a proximal side 7 relative to second shell 10. Proximal side 7 is at least partially open, and distal side 6 is closed and acts as a bottom for carrying the individual portion wrapped in foil 3. The major difference from the first embodiment is that protrusions 5 in first shell 1 act in this embodiment as the main support for tubular foils 3. Protrusions 5 support the peripheral wall of tubular foils 3. In the first embodiment of the invention it was mainly protrusions 15 in second shell 10 that provide this support for foils 3.

Foil 3 is preferably first machined into a tubular shape and is inserted through opening 20 of second shell 10 into protrusion 5 of first shell 1 after both shells 1,10 have been positioned on each other. After foil 3 is released, its tubular shape will be retained by the supporting action of protrusion 5. Foil 3 will be supported at the top by second shell 10, more specifically by an edge of opening 20 of the second shell. In this case the upper edge of foil 21 will project slightly above the surface of second shell 10, as shown in Figures 14 and 15.

If an embodiment is chosen in which the diameter of opening 20 is smaller than the diameter of the upper face of foil 3, upper edge 21 of foil 3 will be supported by the principal surface of second shell 10. This is possible because the diameter of opening 20 of second shell 10 is slightly smaller than the diameter of the upper face of foil 3, as already mentioned above.

In both cases tubular foil 3 is firmly clamped by both shells 1,10, so that its tubular shape is retained without the need for additional means of adhesion. After foil 3 has been inserted in package 11, the foil can be filled with food composition 4 through the same opening 20 in second shell 10.

It is also possible first to insert foil 3 into protrusion 5 of first shell 1, then to position second shell 20 on first shell 1. Foil 3 can afterwards be filled normally with food composition 4 through opening 20 in second shell 10.

Protrusions 5 in the lowest shell 1 preferably also have a conical shape in this embodiment, where the surface area of distal side 6 is smaller than the surface area of proximal side 7. The advantage of a conical shape is that the friction between foil 3 and protrusion 5 is reduced, with the result that the individual portions can be removed more easily from first shell 1.

Slots or recesses may possibly be provided at the top of protrusion 5 in the first shell, thus enabling an individual portion to be removed more easily from protrusion 5 of first shell 1 with the fingers. These slots or recesses may be any slot or recess known to the person skilled in the art.

After the individual foils are filled with food composition 4, the whole can be covered with a cover, but second shell 10, after food composition 4 has stiffened, may also be replaced by a new second shell 10 in which no openings 20 are provided. This new second shell 10 then acts as a cover.

All other features of this second preferred embodiment of packaging material 11 according to the present invention, such as the nature of food composition 4, the shape of foil 3 and the material from which it is produced, the shape of protrusions 5, etc., are identical to those of the first embodiment and are described n the description of the figures showing them.

## Claims

1. A package (11) for at least one individual portion of a food composition (4), with a foil (3) formed into a tubular shape, to be filled with the food composition (4) in an axial direction of the tubular shape, and thus to form the individual portion, and with a first shell (1) for supporting the foil (3) upright in the axial direction, **characterised in that** the package (11) also comprises a second shell (10) positioned in relation to the first shell (1) with the axial direction of the tubular shape extending between the first shell (1) and an opening (20) in the second shell (10), enabling the foil (3) to be filled with the food composition (4) through said opening, the second shell interacting with the first shell (1) and the foil (3) , clamping the foil (3) folded into a tubular shape between the first (1) and the second shell (10) in order to preserve the tubular shape.

2. The package (11) according to Claim 1, **characterised in that** the tubular foil (3) is at least partially clamped in at least one protrusion (5, 15) which is present in at least one of the shells (1, 10), wherein the protrusion (5, 15) comprises a vertical peripheral wall (8, 18) which at least partially encloses the foil (3) folded into a tubular shape, and wherein the protrusion (5, 15) is also provided with one proximally located side (7, 17) relative to the other shell (10, 1) and one distally located side (6, 16) relative to the other shell (1, 10), herein the proximally located side (7, 17) is open.

3. The package (11) according to Claim 2, **characterised in that** the at least one protrusion (5, 15) always extends in a direction pointing away from the other shell (10, 1).

4. The package (11) according to Claim 2 or 3, **characterised in that** the at least one protrusion (15) is present in the second shell (10) and **in that** the opening (20) is provided in the distally located side (16) of the protrusion (15) in the second shell (10).

5. The package (11) according to Claim 4, **characterised in that** the vertical peripheral wall (18) of the protrusion (15) in the second shell (10) has a distal peripheral edge (13), wherein an inner edge (14), which is directed towards the volume enclosed by the protrusion, and which restricts the opening (20), extends along at least part of the distal peripheral edge (13).

6. The package (11) according to any one of Claims 2-5, **characterised in that** the at least one protrusion (5, 15) has a conical shape, wherein the surface area of the distally located side (6, 16) is smaller than the surface area of the proximally located side (7, 17).

7. The package (11) according to any one of Claims 1-6, **characterised in that** the first shell (1) is detachably connected to the second shell (10).

8. The package (11) according to any one of Claims 1-7, **characterised in that** both shells (1,10) of the package (11) are provided with interacting positioning means (2, 12) in order to determine the position of the first shell (1) detachably in relation to the second shell (10).

9. The package (11) according to any one of Claims 1-8, **characterised in that** the at least one protrusion (5, 15) has a vertical peripheral wall (8, 18) and **in that** there is an open space between the foil (3) and the vertical peripheral wall (8, 18).

10. The package (11) according to any one of Claims 1-9, **characterised in that** the distal side (6, 16) and proximal side (7, 17) of the at least one protrusion (5, 15) are circular in shape.

11. The package (11) according to any one of Claims 1-10, **characterised in that** the foil (3) is rectangular in shape.

12. The package (11) according to any one of Claims 1-11, **characterised in that** the foil (3) is produced from a transparent material.

13. The package (11) according to any one of Claims 1-12, **characterised in that** an individual portion has an upper side, wherein a cover is provided on the upper side of the individual portion.

14. The package (11) according to any one of Claims 1-13, **characterised in that** a cover is provided on the second shell (10).

15. A method of forming at least one individual portion of a food composition within a package according to any one of claims 1-14, **characterised in that** the method comprises the following steps:
(a) the pre-forming of the foil (3) into a tubular shape so that the vertical edges loosely overlap, at least partially, in the peripheral direction
(b) the application of the foil (3) formed into a tubular shape between the first and second shell
(c) the filling of the closed tubular foil (3) with the food composition (4) through the opening (20) in the second shell (10).

## Patentansprüche

1. Verpackung (11) für mindestens eine Einzelportion einer Lebensmittelzusammensetzung (4) mit einer Folie (3), die in eine röhrenförmige Form gebildet ist, die mit der Lebensmittelzusammensetzung (4) in eine axiale Richtung der röhrenförmigen Form zu füllen ist, und derart die Einzelportion zu bilden, und mit einer ersten Schale (1) zum Stützen der Folie (3) aufrecht in die axiale Richtung, **dadurch gekennzeichnet, dass** die Verpackung (11) auch eine zweite Schale (10) aufweist, die in Bezug zu der ersten Schale (1) mit der axialen Richtung der röhrenförmigen Form, die sich zwischen der ersten Schale (1) und einer Öffnung (20) in der zweiten Schale (10) erstreckt, positioniert ist, was es der Folie (3) ermöglicht, mit der Lebensmittelzusammensetzung (4) durch die Öffnung gefüllt zu werden, wobei die zweite Schale mit der ersten Schale (1) und der Folie (3) zusammenwirkt, wobei die Folie (3), die in eine röhrenförmige Form gefaltet ist, zwischen der ersten (1) und der zweiten Schale (10) eingeklemmt wird, um die röhrenförmige Form zu wahren.

2. Verpackung (11) nach Anspruch 1, **dadurch gekennzeichnet, dass** die röhrenförmige Folie (3) wenigstens teilweise in mindestens einen Vorsprung (5, 15), der auf mindestens einer der Schalen (1, 10) gegenwärtig ist, geklemmt ist, wobei der Vorsprung (5, 15) eine vertikale Umfangswand (8, 18) aufweist, die die Folie (3), die in eine röhrenförmige Form gefaltet ist, wenigstens teilweise einschließt, und wobei der Vorsprung (5, 15) auch mit einer in Bezug zu der anderen Schale (10, 1) proximal liegenden Seite (7, 17) und einer in Bezug zu der anderen Schale (1, 10) distal liegenden Seite (6, 16) versehen ist, wobei die proximal liegende Seite (7, 17) offen ist.

3. Verpackung (11) nach Anspruch 2, **dadurch gekennzeichnet, dass** sich der mindestens eine Vorsprung (5, 15) immer in eine Richtung erstreckt, die von der anderen Schale (10, 1) weg zeigt.

4. Verpackung (11) nach Anspruch 2 oder 3, **dadurch gekennzeichnet, dass** der wenigstens eine Vorsprung (15) in der zweiten Schale (10) gegenwärtig ist, und dass die Öffnung (20) in der distal liegenden Seite (16) des Vorsprungs (15) in der zweiten Schale (10) bereitgestellt ist.

5. Verpackung (11) nach Anspruch 4, **dadurch gekennzeichnet, dass** die vertikale Umfangswand (18) des Vorsprungs (15) in der zweiten Schale (10) eine distale Umfangskante (13) hat, wobei sich eine innere Kante (14), die zu dem Volumen, das von dem Vorsprung eingeschlossen wird, ausgerichtet ist und die Öffnung (20) einschränkt, entlang wenigstens der distalen Umfangskante (13) erstreckt.

6. Verpackung (11) nach einem der Ansprüche 2 bis 5, **dadurch gekennzeichnet, dass** der wenigstens eine Vorsprung (5, 15) eine Kegelform hat, wobei der Oberflächenbereich der distal liegenden Seite (6, 16) kleiner ist als der Oberflächenbereich der proximal liegenden Seite (7, 17).

7. Verpackung (11) nach einem der Ansprüche 1 bis 6, **dadurch gekennzeichnet, dass** die erste Schale (1) abnehmbar mit der zweiten Schale (10) verbunden ist.

8. Verpackung (11) nach einem der Ansprüche 1 bis 7, **dadurch gekennzeichnet, dass** beide Schalen (1, 10) der Verpackung (11) mit in Wechselwirkung stehenden Positionierungsmitteln (2, 12) versehen sind, um die Position der ersten Schale (1) abnehmbar in Bezug zu der zweiten Schale (10) zu bestimmen.

9. Verpackung (11) nach einem der Ansprüche 1 bis 8, **dadurch gekennzeichnet, dass** der wenigstens eine Vorsprung (5, 15) eine vertikale Umfangswand (8, 18) hat, und dass sich zwischen der Folie (3) und der vertikalen Umfangswand (8, 18) ein offener Raum befindet.

10. Verpackung (11) nach einem der Ansprüche 1 bis 9, **dadurch gekennzeichnet, dass** die distale Seite (6, 16) und die proximale Seite (7, 17) des wenigstens einen Vorsprungs (5, 15) kreisförmig sind.

11. Verpackung (11) nach einem der Ansprüche 1 bis 10, **dadurch gekennzeichnet, dass** die Folie (3) rechteckig ist.

12. Verpackung (11) nach einem der Ansprüche 1 bis 11, **dadurch gekennzeichnet, dass** die Folie (3) aus einem durchsichtigen Material hergestellt ist.

13. Verpackung (11) nach einem der Ansprüche 1 bis 12, **dadurch gekennzeichnet, dass** eine Einzelportion eine Oberseite hat, in der eine Abdeckung auf der oberen Seite der Einzelportion bereitgestellt ist.

14. Verpackung (11) nach einem der Ansprüche 1 bis 13, **dadurch gekennzeichnet, dass** die Abdeckung auf der zweiten Schale (10) bereitgestellt ist.

15. Verfahren zum Bilden mindestens einer Einzelportion einer Lebensmittelzusammensetzung mit einer Verpackung nach einem der Ansprüche 1 bis 14, **dadurch gekennzeichnet, dass** das Verfahren die folgenden Schritte aufweist:
(a) Vorformen der Folie (3) in einer röhrenförmigen Form, so dass sich die senkrechten Kanten wenigstens teilweise in die Umfangsrichtung überlappen,
(b) Anlegen der Folie (3), die in eine röhrenförmige Form gebildet ist, zwischen der ersten und der zweiten Schale,
(c) Füllen der geschlossenen röhrenförmigen Folie mit der Lebensmittelzusammensetzung (4) durch die Öffnung (20) in der zweiten Schale (10).

## Revendications

1. Emballage (11) pour au moins une portion individuelle d'une composition alimentaire (1), comprenant une feuille (3) façonnée en une forme tubulaire, destinée à être remplie avec la composition alimentaire (4) dans une direction axiale de la forme tubulaire, et à former ainsi la portion individuelle, et comprenant une première coque (1) pour supporter la feuille (3) verticalement dans la direction axiale, **caractérisé en ce que** l'emballage (11) comprend également une deuxième coque (10) positionnée par rapport à la première coque (1), la direction axiale de la forme tubulaire s'étendant entre la première coque (1) et une ouverture (20) dans la deuxième coque (10) permettant à la feuille (3) d'être remplie avec la composition alimentaire (4) par ladite ouverture, la deuxième coque interagissant avec la première coque (1) et la feuille (3), serrant la feuille (3) façonnée en une forme tubulaire entre la première (1) et la deuxième coque (10) afin de préserver la forme tubulaire.

2. Emballage (11) selon la revendication 1, **caractérisé en ce que** la feuille tubulaire (3) est au moins en partie serrée dans au moins une protubérance (5, 15) qui est présente dans au moins une des coques (1, 10), dans lequel la protubérance (5, 15) comprend une paroi périphérique verticale (8, 18) qui entoure au moins partiellement la feuille (3) façonnée en une forme tubulaire, et dans lequel la protubérance (5, 15) est également pourvue d'un côté (7, 17) situé proximalement par rapport à l'autre coque (10, 1) et d'un côté (6, 16) situé distalement par rapport à l'autre coque (1, 10), le côté (7, 17) situé proximalement étant ouvert.

3. Emballage (11) selon la revendication 2, **caractérisé en ce que** ladite au moins une protubérance (5, 15) s'étend toujours dans une direction s'écartant de l'autre coque (10, 1).

4. Emballage (11) selon la revendication 2 ou 3, **caractérisé en ce que** ladite au moins une protubérance (15) est présente dans la deuxième coque (10) et **en ce que** l'ouverture (20) est prévue dans le côté (16) de la protubérance (15) situé distalement dans la deuxième coque (10).

5. Emballage (11) selon la revendication 4, **caractérisé en ce que** la paroi périphérique verticale (18) de la protubérance (15) dans la deuxième coque (10) a un bord périphérique distal (13), dans lequel un bord intérieur (14), qui est dirigé vers le volume entouré par la protubérance et qui limite l'ouverture (20), s'étend le long d'au moins une partie du bord périphérique distal (13).

6. Emballage (11) selon l'une quelconque des revendications 2 - 5, **caractérisé en ce que** ladite au moins une protubérance (5, 15) a une forme conique, dans lequel la superficie du côté (6, 16) situé distalement est plus petite que la superficie du côté (7, 17) situé proximalement.

7. Emballage (11) selon l'une quelconque des revendications 1-6, **caractérisé en ce que** la première coque (1) est reliée de manière détachable à la deuxième coque (10).

8. Emballage (11) selon l'une quelconque des revendications 1 - 7, **caractérisé en ce que** les deux coques (1, 10) de l'emballage (11) sont pourvues de moyens de positionnement (2, 12) interdépendants afin de déterminer la position détachable de la première coque (1) par rapport à la deuxième coque (10).

9. Emballage (11) selon l'une quelconque des revendications 1-8, **caractérisé en ce que** ladite au moins une protubérance (5, 15) a une paroi périphérique verticale (8, 18) et **en ce qu'**il y a un espace ouvert entre la feuille (3) et la paroi périphérique verticale (8, 18).

10. Emballage (11) selon l'une quelconque des revendications 1-9, **caractérisé en ce que** le côté distal (6, 16) et le côté proximal (7, 17) de ladite au moins une protubérance (5, 15) sont de forme circulaire.

11. Emballage (11) selon l'une quelconque des revendications 1-10, **caractérisé en ce que** la feuille (3) est de forme rectangulaire.

12. Emballage (11) selon l'une quelconque des revendications 1-11, **caractérisé en ce que** la feuille (3) est produite à partir d'un matériau transparent.

13. Emballage (11) selon l'une quelconque des revendications 1-12, **caractérisé en ce qu'**une portion individuelle a un côté supérieur, un couvercle étant prévu sur le côté supérieur de la portion individuelle.

14. Emballage (11) selon l'une quelconque des revendications 1-13, **caractérisé en ce qu'**un couvercle est prévu sur la deuxième coque (10).

15. Procédé de formage d'au moins une portion individuelle d'une composition alimentaire dans un emballage selon l'une quelconque des revendications 1-14, **caractérisé en ce que** le procédé comprend les étapes suivantes :
(a) le préfaçonnage de la feuille (3) en une forme tubulaire afin que les bords verticaux se chevauchent de manière lâche, au moins partiellement, dans la direction périphérique
(b) l'application de la feuille (3) façonnée en une forme tubulaire entre la première et la deuxième coque
(c) le remplissage de la feuille tubulaire (3) fermée avec la composition alimentaire (4) par l'ouverture (20) dans la deuxième coque (10).
